# FASCICULE DE BREVET EUROPEEN

(11) **EP 0 567 389 B1**
(45) Date de publication et mention de la délivrance du brevet: **12.06.1996**
(21) Numéro de dépôt: 93401018.2
(22) Date de dépôt: 20.04.1993
(51) Int. Cl.: B60S 1/34

(54) **Bras d'essuie-glace incorporant au moins un ressort de pression de contact**
Wischarm mit wenigstens einer Anpressdruckfeder
Wiperarm incorporating at least one contact pressure spring

(30) Priorité: 21.04.1992 FR 9204845
(43) Date de publication de la demande: 27.10.1993
(73) Titulaire: VALEO SYSTEMES D'ESSUYAGE, 78321 La Verrière (FR)
(72) Inventeur: Schon, Wilfrid, F-63580 St Etienne/Usson (FR); Chevalier, Jean-Claude, F-63500 Issoire (FR)
(74) Mandataire: Martin, Jean-Jacques

(56) Documents cités:
- DE-A- 4 029 404
- FR-A- 2 551 406

## Description

La présente invention concerne le domaine des essuie-glace, et plus particulièrement un bras d'essuie-glace incorporant au moins un ressort de pression de contact.

Il est connu d'utiliser un ou plusieurs ressorts de pression de contact dans des bras d'essuie-glace comprenant une tête d'entraînement, un carter articulé sur ladite tête et une tige porte-balai fixée à une extrémité dans ledit carter, propre à recevoir de façon articulée à l'autre extrémité un balai adapté à essuyer un pare-brise de véhicule automobile. Un ou plusieurs ressorts de pression de contact travaillant en traction sont interposés entre la tête d'entraînement et la tige porte-balai, en vue d'exercer un couple de rappel dirigé vers le pare-brise et appliquer ainsi avec une pression de contact suffisante le balai contre la surface à essuyer.

Pour limiter le coût de l'essuie-glace, on se contente généralement d'un seul ressort de pression de contact, accroché par une extrémité à un oeillet prévu sur la tige porte-balai.

Cependant, sur certains véhicules haut de gamme, on préfère pour des raisons de sécurité, utiliser deux ressorts de pression de contact travaillant en traction. De ce fait, si l'un des ressorts casse, l'autre continue à remplir sa fonction.

Pour réduire les coûts de fabrication, les constructeurs prévoient de munir d'une pièce d'accrochage les tiges porte-balai initialement destinées à l'accrochage d'un seul ressort. Cette pièce d'accrochage est fixée sur la tige porte-balai et comporte deux oeillets destinés à accueillir chacun un ressort de pression de contact.

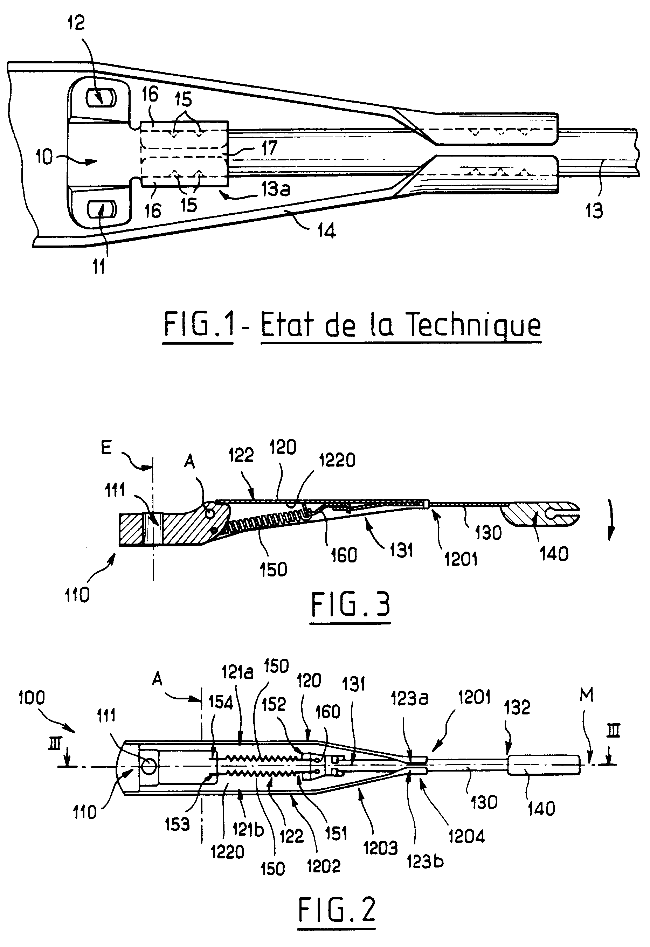

Une pièce d'accrochage typique selon l'art antérieur est représentée sur la figure 1.

Comme on peut le remarquer à l'examen de cette figure, la pièce d'accrochage référencée 10 dans son ensemble comporte deux oeillets 11 et 12 destinés chacun à l'accrochage d'un ressort de pression de contact non représenté. La pièce 10 est fixée à l'extrémité 13a d'une tige porte-balai 13, montée sur un carter 14.

La tige 13 comporte des indentations 15 sur lesquelles sont rabattues et pressées lors du montage des pattes 16 de la pièce d'accrochage 10, reliées entre elles par un dos 17.

Un tel système d'accrochage de ressort de pression de contact sur la tige 13 présente ainsi l'inconvénient de nécessiter lors de la pose de la pièce d'accrochage des opérations de pliage et de pressage longues et coûteuses à effectuer.

On a proposé dans la publication DE-A-40 29 404 un bras d'essuie-glace comprenant une tête d'entraînement, un carter articulé sur ladite tête d'entraînement, une tige porte-balai engagée à une extrémité dans ledit carter, propre à recevoir de façon articulée à son autre extrémité un balai adapté à venir au contact d'une surface à essuyer, et au moins un ressort de pression de contact retenu à une extrémité sur ladite tête d'entraînement et accroché à l'extrémité opposée sur une pièce d'accrochage montée sur ladite tige porte-balai, l'une des deux (pièce d'accrochage ou tige porte-balai) étant munie d'au moins un logement tandis que l'autre est munie d'au moins un élément de retenue apte à s'engager dans ledit logement en vue de retenir la pièce d'accrochage sur la tige porte-balai. Dans ce bras d'essuie-glace connu, le montage des ressorts de pression de contact et de la pièce d'accrochage demande une attention particulière car la pièce d'accrochage n'est pas maintenue sur la tige porte-balai en l'absence de traction exercée sur la pièce d'accrochage par les ressorts de pression de contact.

L'invention a pour objet de proposer un bras d'essuie-glace muni d'un système d'accrochage amélioré des ressorts de pression de contact sur la tige porte-balai, remédiant aux inconvénients précédemment cités, et a notamment pour but de rendre plus aisé le montage de la pièce d'accrochage.

L'invention propose pour cela un bras d'essuie-glace présentant les caractéristiques énoncées dans la revendication 1.

De préférence, le bras d'essuie-glace comporte deux ressorts de pression de contact.

Avantageusement, la tige porte-balai comporte au moins une découpe apte à servir dedit logement.

Dans une réalisation préférée, le carter présente une section ayant globalement la forme d'un "U" renversé, comprenant deux ailes latérales raccordées à une extrémité sur un dos.

De préférence, l'élément de retenue est maintenu engagé dans ledit logement par appui de la pièce d'accrochage contre le dos du carter.

Avantageusement, la tige porte-balai repose sur un secteur axial de sa périphérie contre le dos du carter et comporte une extrémité libre espacée par rapport à ce dos.

Dans un mode de réalisation, la pièce d'accrochage comprend une région propre à s'insérer entre la tige porte-balai et le dos du carter, au moins un épanouissement transversal adapté à servir d'élément de retenue, et au moins un oeillet propre à recevoir une extrémité d'un ressort de pression de contact.

Dans un autre mode de réalisation, la pièce d'accrochage est adaptée à être enfilée sur la tige porte-balai et à s'engager dans une découpe prévue sur ladite tige porte-balai après pivotement d'un quart de tour, en vue de se solidariser axialement avec ladite tige porte-balai.

De préférence, la tige porte-balai est solidarisée avec le carter par pinçage entre le dos du carter et des portions rabattues des ailes.

D'autres caractéristiques et avantages de l'invention apparaîtront à la lecture de la description détaillée qui va suivre et au vu du dessin annexé sur lequel :
- la figure 1 est une vue de dessous d'un système d'accrochage de ressorts de pression de contact selon l'art antérieur illustré par exemple à la figure 5 de FR-A-2551406.
- la figure 2 est une vue de dessous schématique partielle d'un bras d'essuie-glace équipé d'un système d'accrochage conforme à un mode de réalisation de l'invention,
- la figure 3 est une vue selon le trait de coupe III-III de la figure 2,
- la figure 4 est une vue détaillée de dessous d'une extrémité de tige porte-balai conforme au mode de réalisation représenté sur la figure 2,
- la figure 5 est une vue selon le trait de coupe V-V de la figure 4,
- la figure 6 est une vue de dessous d'une pièce d'accrochage conforme au mode de réalisation représenté sur la figure 2,
- la figure 7 est une vue selon le trait de coupe VII-VII de la figure 6,
- la figure 8 est une vue prise dans les plans de coupe des figures 4 et 6 de la tige porte-balai et de la pièce d'accrochage en position assemblée,
- la figure 9 est une vue de dessous de la tige porte-balai et de la pièce d'accrochage conformes à la figure 8, en position assemblée,
- la figure 10 montre une tige porte-balai et une pièce d'accrochage conformes à une variante de réalisation de l'invention,
- la figure 11 représente la tige porte-balai et la pièce d'accrochage présentées à la figure 10, en position assemblée.

La figure 1 représente en vue de dessous un système d'accrochage de ressorts de pression de contact conforme à l'art antérieur, et elle a déjà été décrite.

On a représenté schématiquement sur les figures 2 et 3 un bras d'essuie-glace muni d'un système d'accrochage de ressorts de pression de contact conforme à un mode de réalisation de l'invention.

Ce bras d'essuie-glace, référencé 100 dans son ensemble, comporte une tête d'entraînement 110, un carter 120 articulé sur ladite tête, une tige porte-balai 130, conforme à l'invention, solidaire du carter 120 et une pince 140 connue adaptée pour recevoir de façon articulée un balai d'essuie-glace connu en soi et non représenté. Deux ressorts de pression de contact 150 sont accrochés de façon connue à leurs extrémités 151, 152, 153, 154 et s'interposent entre la tête d'entraînement 110 et le carter 120, afin d'exercer un couple de rappel tendant à presser le balai sur la surface à essuyer.

La tête d'entraînement 110, de type connu, est apte à être entraînée en rotation autour d'un axe d'entraînement E. Elle comporte à cet effet un alésage 111 centré sur l'axe d'entraînement E, destiné à recevoir un arbre d'entraînement, non représenté.

Le carter 120 est articulé sur la tête d'entraînement 110 autour d'un axe de débattement A, perpendiculaire à l'axe d'entraînement E. L'axe de débattement A s'étend perpendiculairement au plan de coupe de la figure 3.

Le carter 120 présente, de préférence, comme représenté, une section ayant globalement la forme d'un "U" renversé, comprenant deux ailes latérales 121a et 121b raccordées à une extrémité sur la paroi intérieure 1220 d'un dos plan 122. Les ailes 121a et 121b sont habituellement, comme représenté, disposées symétriquement de part et d'autre d'un plan médian M perpendiculaire au plan de la figure 2, et confondu avec le plan de coupe de la figure 3. La hauteur des ailes 121a et 121b, mesurée perpendiculairement au plan du dos 122, décroît, en éloignement de la tête d'entraînement 110, jusqu'au voisinage de l'extrémité libre 1201 du carter 120.

La largeur du dos 122, mesurée perpendiculairement au plan médian M, reste constante sur une première partie 1202 s'étendant à partir de la tête d'entraînement 110 en direction de l'extrémité libre 1201, puis décroît sur une deuxième partie 1203, et demeure enfin constante sur une troisième partie 1204 s'étendant jusqu'à l'extrémité libre 1201.

Les ailes 121a et 121b présentent des portions 123a, 123b rabattues vers la paroi intérieure 1220 du dos 122 au niveau de la troisième partie 1204 de façon à retenir par pinçage la tige porte-balai 130, l'axe longitudinal de la tige porte-balai 130 étant de préférence, comme représenté, contenu dans le plan médian M.

La tige porte-balai 130 est de section rectangulaire. Le dos 122 présente au niveau de la troisième partie 1204 une largeur correspondant sensiblement à la largeur de la tige 130, et les portions rabattues 123a et 123b recouvrent chacune à mi-largeur la tige porte-balai 130. Il convient de remarquer que les portions rabattues 123a et 123b maintiennent la tige porte-balai 130 plaquée contre la paroi intérieure 1220 du dos 122, au moins sur un secteur axial de la partie de la tige porte-balai 130 placée à l'intérieur du carter 120, de préférence le long de la deuxième partie 1203.

L'extrémité de la tige porte-balai 130 engagée à l'intérieur du carter 120 est référencée 131. Son extrémité opposée référencée 132, porte la pince 140.

Les ressorts de pression de contact 150 sont logés à l'intérieur du carter 120 entre les ailes 121a et 121b et s'accrochent par des extrémités 153 et 154 opposées aux extrémités 151 et 152 sur une pièce d'accrochage 160 conforme à l'invention.

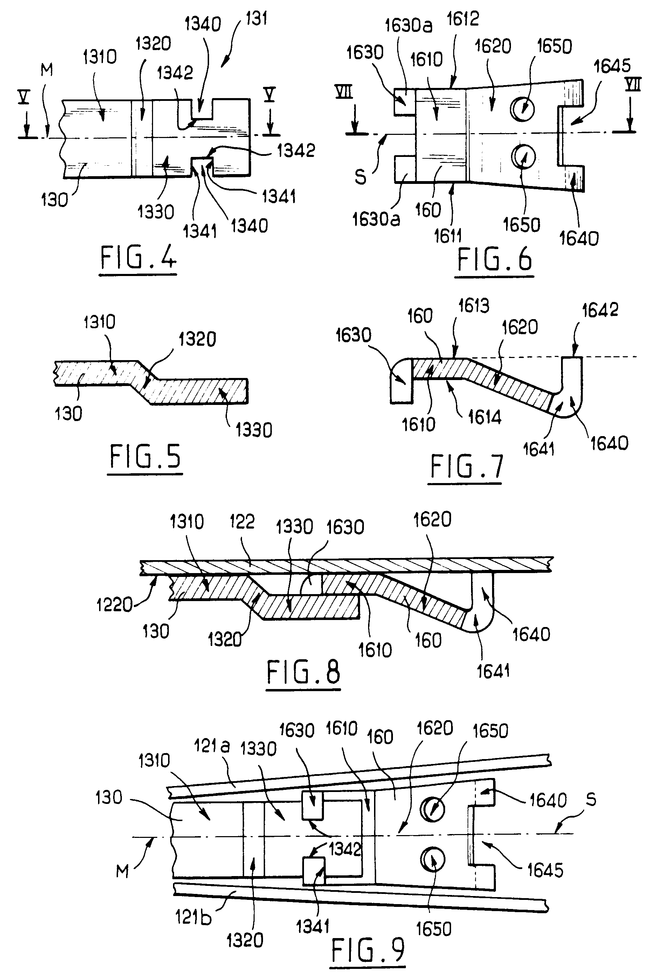

On a représenté sur les figures 4 à 9 de façon plus détaillée la pièce d'accrochage 160 et la tige porte-balai 130, séparément et en position assemblée.

En se référant à la figure 4, on voit que la tige porte-balai 130 présente au voisinage de l'extrémité 131 trois zones :
- une zone principale référencée 1310, plane, destinée à s'appliquer contre la paroi intérieure 1220 du dos 122, comme montré sur la figure 8 ;
- une zone intermédiaire 1320 qui prolonge obliquement la zone principale 1310 en direction de l'extrémité libre 131 de la tige porte-balai 130, et en éloignement de la paroi intérieure 1220 du dos 122 ;
- une zone d'extrémité 1330 qui s'étend sensiblement parallèlement à la première zone 1310 jusqu'à l'extrémité libre 131, ménageant ainsi un espace entre la tige porte-balai 130 et la paroi intérieure 1220 du dos 122.

Conformément à l'invention, la tige porte-balai 130 est munie d'un logement propre à accueillir un élément de retenue porté par la pièce d'accrochage 160, en vue d'immobiliser axialement la pièce d'accrochage 160 par rapport à la tige porte-balai 130.

Plus précisément, dans les modes de réalisation décrits, non limitatifs de l'invention, ce logement se présente sous la forme d'une découpe pratiquée sur la zone d'extrémité 1330, comprenant deux encoches 1340 disposées symétriquement par rapport au plan médian M. Les encoches 1340 ont une forme en créneau ouvert vers l'extérieur et comportent chacune deux flancs transversaux 1341, perpendiculaires au plan médian M, raccordés sur un fond 1342 parallèle au plan médian M.

On a représenté sur les figures 6 et 7 une pièce d'accrochage 160 munie de moyens de retenue adaptés à coopérer avec les encoches 1340 prévues sur la tige porte-balai 130, en vue d'immobiliser axialement la pièce d'accrochage 160 par rapport à la tige porte-balai 130. Si l'on se réfère à ces figures, on voit que la pièce d'accrochage 160 est constituée par un ruban dont le profil a globalement la forme d'un "S" retourné, comportant essentiellement quatre régions, dont deux régions centrales référencées 1610 et 1620, et deux régions d'extrémités référencées 1630 et 1640.

La première région centrale 1610 est propre à être insérée entre la tige porte-balai 130 et le dos du carter. Elle présente à cet effet, deux faces planes parallèles supérieure et inférieure, référencées 1613 et 1614, respectivement destinées à s'appuyer sur la paroi intérieure 1220 du dos 122 et sur la tige porte-balai 130. L'épaisseur de la première région centrale 1610, c'est-à-dire la distance entre le plan des faces supérieure 1613 et inférieure 1614 correspond à l'espacement de la zone d'extrémité 1330 de la tige porte-balai 130 avec la paroi intérieure 1220 du dos 122.

La deuxième région centrale 1620 présente une section transversale rectangulaire s'élargissant à partir de la première, inclinée en éloignement du plan de la face supérieure 1613 d'un angle compris entre 20 et 40°, et comporte des oeillets 1650, propres à recevoir les extrémités 151 et 152 des ressorts de pression de contact 150. De préférence, comme représenté, les oeillets 1650 sont disposés symétriquement de part et d'autre d'un plan de symétrie S pour la pièce d'accrochage 160, perpendiculaire au plan des faces supérieure 1613 et inférieure 1614.

La première région d'extrémité 1630 se raccorde sur la première région centrale 1610 par une portion coudée à angle droit.

De préférence, comme représenté, la première région d'extrémité 1630 s'étend sur une partie seulement de la largeur de la première région centrale 1610 pour former deux épanouissements transversaux 1630a, constituant éléments de retenue, symétriques par rapport au plan de symétrie S, et propres à s'engager dans les encoches 1340 de la tige porte-balai 130 pour immobiliser axialement la pièce d'accrochage 160 par rapport à cette dernière.

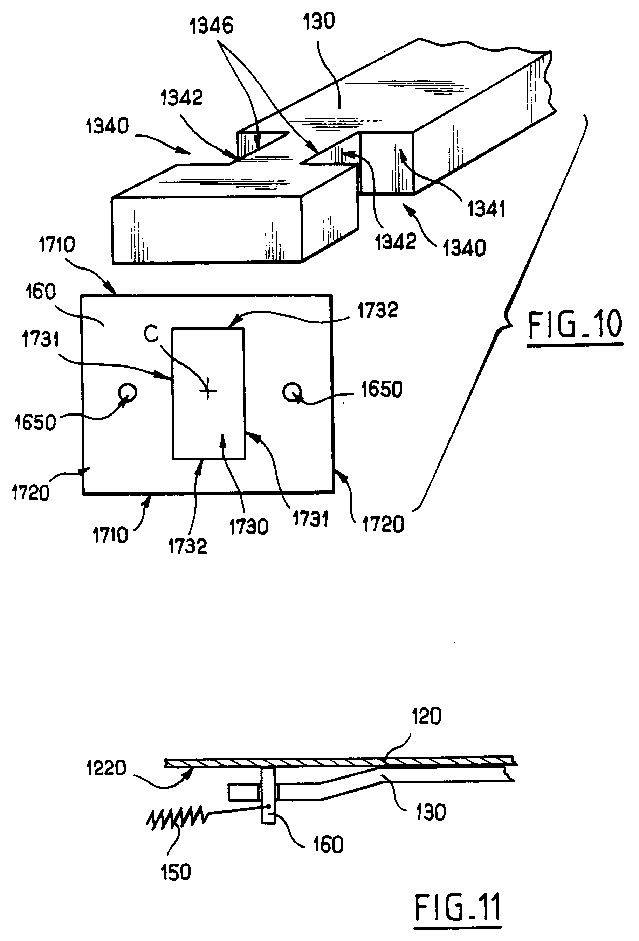

On notera que la première région centrale 1610 présente une largeur supérieure à celle de la zone d'extrémité 1330 de la tige porte-balai 130. Les épanouissements 1630a s'étendent depuis les bords libres longitudinaux 1611 et 1612 de la première région centrale 1610 sur une largeur telle que, lors de la mise en place de la pièce d'accrochage 160 sur la tige porte-balai 130, ceux-ci viennent en butée latéralement contre le fond 1342 des encoches 1340 et axialement contre les flancs 1341, conformément à ce qui est représenté sur la figure 9.

La pièce d'accrochage 160 comporte une deuxième région d'extrémité 1640 opposée à la première, qui se raccorde sur la deuxième région centrale 1620 en formant un coude 1641, en rapprochement du plan de la face supérieure 1613. La deuxième région d'extrémité 1640 s'étend, au-delà du coude 1641, perpendiculairement au plan de la face supérieure 1613. La face d'extrémité libre 1642 de la deuxième région d'extrémité 1640 se situe dans le prolongement virtuel du plan de la face supérieure 1613, de sorte que, lorsque la pièce d'accrochage 160 est mise en place, la face d'extrémité libre 1642 repose contre la paroi intérieure 1220 du dos 122, ce qui assure une bonne tenue des épanouissements 1630 dans les encoches 1340.

Un passage 1645 est prévu sur la deuxième région d'extrémité 1640 pour permettre aux ressorts 150, accrochés dans les oeillets 1650, de s'étendre en direction de la tête d'entraînement 110.

La mise en place d'une pièce d'accrochage 160 conforme à l'invention s'effectue avant que la tige porte-balai 130 ne soit solidarisée avec le carter 120 par pinçage entre la paroi intérieure 1220 du dos 122 et les portions 123a et 123b.

Lorsque la pièce d'accrochage 160 est engagée dans les découpes 1340, les portions 123a et 123b du carter sont rabattues et pressées contre la tige porte-balai 130. Alors, la tige porte-balai 130 repose contre la paroi intérieure 1220 du dos 122 et les épanouissements 1630 de la pièce d'accrochage 160 sont ainsi retenus dans les découpes 1340 par appui de la face supérieure 1613 de la pièce d'accrochage 160 sur le dos 122 du carter 120.

D'autres géométries de tiges porte-balai 130 et de pièces d'accrochage 160 peuvent être proposées sans sortir du cadre de l'invention. Ainsi, on a représenté sur la figure 10 une variante de réalisation comportant une pièce d'accrochage 160 de forme différente, adaptée à s'accrocher sur une tige porte-balai 130 telle que précédemment décrite.

En se référant à la figure 10, on voit que la pièce d'accrochage 160 a la forme d'une pièce plane de contour extérieur rectangulaire comportant deux bords rectilignes parallèles entre eux, de plus grande longueur, 1710, et deux bords rectilignes parallèles entre eux, de longueur moindre, 1720. La pièce d'accrochage 160 est munie d'une fenêtre intérieure 1730 de forme rectangulaire, et d'oeillets 1650 disposés de part et d'autre de cette fenêtre.

De préférence, comme représenté, la pièce d'accrochage 160 est symétrique par rapport à un axe central C. La fenêtre 1730 comporte deux côtés de plus grande longueur référencés 1731, parallèles aux bords 1720 et deux côtés de moindre longueur, référencés 1732 parallèles aux bords 1710. Les oeillets 1650 sont situés à peu près à mi-distance entre les bords 1720 et les côtés 1731 de la fenêtre 1730.

La mise en place de la pièce d'accrochage 160 s'effectue avant pinçage de la tige porte-balai 130 entre le dos 122 du carter 120 et les portions 123a et 123b. La tige porte-balai 130 est introduite axialement dans la fenêtre 1730, jusqu'à ce que les encoches 1340 soient positionnées au niveau des bords 1710 de la pièce d'accrochage 160, puis on fait pivoter la pièce d'accrochage 160 d'un quart de tour, de façon à solidariser axialement la pièce d'accrochage 160 et la tige porte-balai 130. En d'autres termes, les côtés 1731 de la fenêtre 1730 s'engagent dans les encoches 1340 et servent ainsi d'éléments de retenue. Ensuite, la tige porte-balai 130 est pincée entre le dos 122 et les portions rabattues 123a et 123b.

On notera que la distance entre les côtés 1732 de la fenêtre 1730 est supérieure à la largeur de la tige porte-balai 130 pour permettre l'insertion de celle-ci, et que la distance entre les côtés 1731 de la fenêtre 1730, tout en étant inférieure à la largeur de la tige porte-balai 130, est néanmoins supérieure à la distance entre deux arêtes 1346, diamétralement opposées, adjacentes aux fonds 1342 des encoches 1340 et s'étendant parallèlement à l'axe longitudinal de la tige porte-balai 130. L'épaisseur de la pièce d'accrochage 160 correspond, de préférence, comme représenté sur la figure 11, à la distance entre les flancs transversaux 1341 des encoches 1340.

Conformément à une caractéristique de l'invention, la pièce d'accrochage 160 est maintenue engagée sur la tige porte-balai 130 par appui sur une paroi du carter 120, comme on le comprend aisément à l'examen de la figure 11.

Plus précisément, un bord 1710 de la pièce d'accrochage 160 repose contre la paroi intérieure 1220 du dos 120, tandis qu'un bord 1732 de la fenêtre 1730 repose sur la tige porte-balai 130, de façon à interdire tout mouvement de rotation de la pièce 160 autour de son axe central C. A cet effet, la distance entre le bord 1710 reposant sur la paroi intérieure 1220 du dos 122 et le côté 1732 de la fenêtre 1730 le plus proche de ce bord 1710 correspond à l'espacement entre la zone d'extrémité 1330 de la tige porte-balai 130 et la paroi intérieure 1220 du dos 122.

Finalement, l'assemblage d'un bras d'essuie-glace équipé d'un système d'accrochage de ressort de pression de contact selon l'invention est avantageusement simplifié, donc peu coûteux à réaliser.

## Revendications

1. Bras d'essuie-glace comprenant une tête d'entraînement (110), un carter (120) articulé sur ladite tête d'entraînement (110), une tige porte-balai (130) engagée à une extrémité (131) dans ledit carter (120), propre à recevoir de façon articulée à son autre extrémité un balai adapté à venir au contact d'une surface à essuyer, et au moins un ressort de pression de contact retenu à une extrémité (153, 154) sur ladite tête d'entraînement et accroché à l'extrémité opposée (151, 152) sur une pièce d'accrochage (160) montée sur ladite tige porte-balai, l'une des deux (pièce d'accrochage ou tige porte-balai) étant munie d'au moins un logement (1340) tandis que l'autre est munie d'au moins un élément de retenue (1630 ; 1731) apte à s'engager dans ledit logement en vue de retenir la pièce d'accrochage (160) sur la tige porte-balai (130), caractérisé en ce que la pièce d'accrochage présente une région propre à être insérée entre la tige porte-balai et une paroi du carter et en ce que l'élément de retenue (1630 ; 1731) est maintenu engagé dans ledit logement par appui de la pièce d'accrochage (160) contre ladite paroi du carter (120).

2. Bras d'essuie-glace selon la revendication 1, caractérisé en ce qu'il comporte deux ressorts de pression de contact (150).

3. Bras d'essuie-glace selon la revendication 1 ou 2, caractérisé en ce que la tige porte-balai (130) comporte au moins une découpe (1340) apte à servir dedit logement.

4. Bras d'essuie-glace selon l'une des revendications 1 à 3, caractérisé en ce que le carter (120) présente une section ayant globalement la forme d'un "U" renversé, comprenant deux ailes latérales (121a, 121b) raccordées à une extrémité sur un dos (122).

5. Bras d'essuie-glace selon la revendication 4, caractérisé en ce que l'élément de retenue (1630 ; 1731) est maintenu engagé dans ledit logement par appui de la pièce d'accrochage (160) contre le dos (122) du carter (120).

6. Bras d'essuie-glace selon la revendication 5, caractérisé en ce que la tige porte-balai (130) repose sur un secteur axial de sa périphérie contre le dos (122) du carter et comporte une extrémité libre espacée par rapport à ce dos (122).

7. Bras d'essuie-glace selon la revendication 6, caractérisé en ce que la pièce d'accrochage (160) comprend une région (1610) propre à s'insérer entre la tige porte-balai (130) et le dos du carter (122), au moins un épanouissement transversal (1630) adapté à servir d'élément de retenue, et au moins un oeillet (1650) propre à recevoir une extremité d'un ressort de pression de contact (150).

8. Bras d'essuie-glace selon la revendication 6, caractérisé en ce que la pièce d'accrochage (160) est adaptée à être enfilée sur la tige porte-balai (130) et à s'engager dans une découpe (1340) prévue sur ladite tige porte-balai (130) après pivotement d'un quart de tour, en vue de se solidariser axialement avec ladite tige porte-balai (130).

9. Bras d'essuie-glace selon l'une des revendications 1 à 8, caractérisé en ce que la tige porte-balai (130) est solidarisée avec le carter (120) par pinçage entre le dos (122) du carter (120) et des portions rabattues (123a, 123b) des ailes (121a, 121b).

## Claims

1. A windscreen wiper arm comprising a drive head (110), a housing (120) pivoted on said drive head (110), a wiper-blade-carrying rod (130) engaged at one end (131) within said housing (120), the other end of the rod being suitable for receiving a pivotally-mounted wiper blade adapted for contacting a surface to be wiped, and at least one contact pressure spring, one end (153, 154) of which is retained on said drive head and the other end (151, 152) of which is hooked onto a hooking part (160) mounted on said wiper-blade-carrying rod, one of the hooking part and the wiper-blade-carrying rod being provided with at least one seating (1340) and the other of them being provided with at least one retaining element (1630; 1731) suitable for engaging in said seating so as to retain the hooking part (160) on the wiper-blade-carrying rod (130), the arm being characterized in that the hooking part has a region suitable for insertion between the wiper-blade-carrying rod and a wall of the housing and in that the retaining element (1630; 1731) is held in engagement in said seating by the hooking part (160) bearing against said wall of the housing (120).

2. A windscreen wiper arm according to claim 1, characterized in that it includes two contact pressure springs (150).

3. A windscreen wiper arm according to claim 1 or claim 2, characterized in that the wiper-blade-carrying rod (130) includes at least one cut-out (1340) suitable for acting as said seating.

4. A windscreen wiper arm according to any of claims 1 to 3, characterized in that the overall section of the housing (120) is in the form of an upside-down U, comprising two lateral flanges (121a, 121b) each joined along one side to a web (122).

5. A windscreen wiper arm according to claim 4, characterized in that the retaining element (1630; 1731) is held in engagement in said seating by the hooking part (160) bearing against the web (122) of the housing (120).

6. A windscreen wiper arm according to claim 5, characterized in that an axial sector of the periphery of the wiper-blade-carrying rod (130) rests against the web (122) of the housing (120) and includes a free end which is spaced from that web (122).

7. A windscreen wiper arm according to claim 6, characterized in that the hooking part (160) includes a region (1610) suitable for insertion between the wiper-blade-carrying rod (130) and the web of the housing (122), at least one transverse extension (1630) adapted to act as a retaining element, and at least one eyelet (1650) suitable for receiving one end of a contact pressure spring (150).

8. A windscreen wiper arm according to claim 6, characterized in that the hooking part (160) is adapted to be threaded onto the wiper-blade-carrying rod (130) and, after being pivoted through a quarter turn, to engage in a cut-out (1340) provided on said wiper-blade-carrying rod (130), so as to secure the hooking part axially onto said wiper-blade-carrying rod (130).

9. A windscreen wiper arm according to any of claims 1 to 8, characterized in that the wiper-blade-carrying rod (130) is secured to the housing (120) by a pinching action between the web (122) of the housing (120) and the bent-over portions (123a, 123b) of the flanges (121a, 121b).

## Patentansprüche

1. Wischarm, bestehend aus einem Antriebskopf (110), einem gelenkig mit dem besagten Antriebskopf (110) verbundenen Gehäuse (120), einem Wischblatthalter (130), der an einem Ende (131) in dem besagten Gehäuse (120) befestigt ist, um an seinem anderen Ende gelenkig ein Wischblatt aufzunehmen, das zum Wischen der Windschutzscheibe eines Kraftfahrzeugs dient, und aus wenigstens einer Anpreßdruckfeder, die mit einem Ende (153, 154) an dem besagten Antriebskopf gehalten und mit dem entgegengesetzten Ende (151, 152) an einem an dem besagten Wischblatthalter angebrachten Einsetzstück (160) eingehakt ist, wobei eines der beiden Teile (Einsetzstück oder Wischblatthalter) mit wenigstens einer Aufnahme (1340) versehen ist, während das jeweils andere mit wenigstens einem Halteelement (1630; 1731) versehen ist, das in die besagte Aufnahme eingreifen kann, um das Einsetzstück (160) am Wischblatthalter (130) festzuhalten , **dadurch gekennzeichnet,** daß das Einsetzstück einen Bereich aufweist, der zwischen dem Wischblatthalter und einer Wand des Gehäuses eingefügt werden kann und daß das Halteelement (1630; 1731) durch Andrücken des Einsetzstücks (160) an die besagte Wand des Gehäuses (120) in der besagten Aufnahme im Eingriff gehalten wird.

2. Wischarm nach Anspruch 1 , **dadurch gekennzeichnet,** daß er zwei Anpreßdruckfedern (150) umfaßt.

3. Wischarm nach Anspruch 1 oder 2 **, dadurch gekennzeichnet,** daß der Wischblatthalter (130) wenigstens einen Einschnitt (1340) enthält, der als die besagte Aufnahme dienen kann.

4. Wischarm nach einem der Ansprüche 1 bis 3 , **dadurch gekennzeichnet,** daß das Gehäuse (120) einen Querschnitt aufweist, der insgesamt die Form eines umgekehrten "U" mit zwei Seitenschenkeln (121a, 121b) besitzt, die sich mit einem Ende an einen Rückenteil (122) anschließen.

5. Wischarm nach Anspruch 4 , **dadurch gekennzeichnet,** daß das Halteelement (1630; 1731) durch Andrücken des Einsetzstücks (160) am Rückenteil (122) des Gehäuses (120) in der besagten Aufnahme im Eingriff gehalten wird.

6. Wischarm nach Anspruch 5 , **dadurch gekennzeichnet**, daß der Wischblatthalter (130) mit einem axialen Abschnitt seines Umfangs am Rückenteil (122) des Gehäuses aniegt und ein freies Ende umfaßt, das in einem Abstand von diesem Rückenteil (122) angeordnet ist.

7. Wischarm nach Anspruch 6 , **dadurch gekennzeichnet**, daß das Einsetzstück (160) einen Bereich (1610), der zwischen den Wischblatthalter (130) und den Rückenteil (122) des Gehäuses eingefügt werden kann, wenigstens eine Querausstülpung (1630), die als Halteelement dienen kann, und wenigstens eine Öse (1650) enthält, in die ein Ende einer Anpreßdruckfeder (150) eingesetzt werden kann.

8. Wischarm nach Anspruch 7 , **dadurch gekennzeichnet**, daß das Einsetzstück (160) auf dem Wischblatthalter (130) aufgesteckt und in einen an dem besagten Wischblatthalter (130) vorgesehenen Einschnitt (1340) nach Schwenkung um eine Vierteldrehung eingesetzt werden kann, um es axial fest mit dem besagten Wischblatthalter (130) zu verbinden.

9. Wischarm nach einem der Ansprüche 1 bis 6 , **dadurch gekennzeichnet**, daß der Wischblatthalter (130) mit dem Gehäuse (120) durch Einklemmen zwischen dem Rückenteil (122) des Gehäuses (120) und umgebogenen Abschnitten (123a, 123b) der Schenkel (121a, 121b) fest verbunden wird.
